# EUROPEAN PATENT SPECIFICATION

(11) **EP 3 518 084 B1**
(45) Date of publication and mention of the grant of the patent: **19.05.2021**
(21) Application number: 17853497.0
(22) Date of filing: 26.09.2017
(51) Int. Cl.: G06F 3/033, G06F 3/0362, A63F 13/24, A63F 13/92, A63F 13/98, H04M 1/725, H04N 5/232, B64C 39/02, B64D 47/08, G05D 1/00, G06F 1/16

(54) **PATCH TYPE CONTROLLER**
PATCH-STEUERGERÄT
DISPOSITIF DE COMMANDE DE TYPE PATCH

(30) Priority: 26.09.2016 KR 20160122793
(43) Date of publication of application: 31.07.2019
(73) Proprietor: Itvers Co., Ltd., Seongnam-si, Gyeonggi-do 13487 (KR)
(72) Inventor: KIM, Youn Soo, Seoul 05834 (KR); HYUN, Euy Sub, Seoul 02566 (KR)
(74) Representative: González López-Menchero, Álvaro Luis
(86) International application number: PCT/KR2017/010584
(87) International publication number: WO 2018/056783

(56) References cited:
- EP-A1- 2 985 918
- KR-A- 20110 115 453
- KR-A- 20140 035 209
- KR-A- 20150 025 754
- KR-A- 20150 087 259
- KR-B1- 100 752 727
- KR-B1- 101 637 985
- KR-Y1- 200 472 008
- US-A1- 2009 090 750
- US-A1- 2014 206 451
- Anonymous: "Remarkable Performance of DJI's Inspire 1 Created in China and Seen at P&i", Photohistory.tistory.com, 17 April 2015 (2015-04-17), XP055590615, Retrieved from the Internet: URL:http://photohistory.tistory.com/15337

## Description

### TECHNICAL FIELD

The present invention relates to a controller, and specifically, to a controller which can generate an input signal of a cellular phone or a wireless communication device.

### BACKGROUND ART

Recently, many portable terminals such as a smart phone or the like are released.

Meanwhile, although a liquid crystal display of a small size is applied to conventional smart phones to conveniently carry the smart phones and to be faithful to the original function of a call, as users recently tend to prefer getting more information from a wide screen rather to portability, smart phones provided with a liquid crystal display of a large size tend to increase more and more.

However, although visual comfort of a user may be satisfied as the size of the smart phone increases, there is a problem in that the smart phone is difficult to control using one hand.

In addition, most of inputs of the smart phone is accomplished through a touch screen, and there is a problem in that when a user plays a game using the smart phone, precise handling is not easy, and moreover, when handling buttons displayed on the touch screen are handled using a hand to make an input, the handling buttons or the hand hides the display.

EP3260009-A1 discloses a portable terminal case that accommodates a portable terminal and comprises an input button mounted on the portable terminal case, wherein the input button generates an input signal of the portable terminal.

US2014/0206451-A1 discloses reconfigurable clip-on modules for mobile computing devices, wherein at least one of the modules has an input button or other control (such as a four-way control) and at least one of the modules can communicate with the computing device without needing to be connected to it via a wire. The input button is mapped to a user input in a program, such as a game, which is running or displayed on the computing device to which the modules are clipped. Any suitable attachment mechanism may be used, including mechanisms using adhesion. A module may fix to a single face of the computing device.

US2009/0090750-A1 discloses a finger holder for an electronic hand held device, the holder comprising a base attached to the rear of the device and a ring attached to the base.

EP2985918-A1 discloses a mobile device accessory that includes a fixing plate to be fixed to a surface of a mobile device, a ring having an opening portion at a side thereof and a connecting member connecting the opening portion of the ring with the fixing plate such that the ring is configured to rotate to have various angles with respect to the fixing plate and to maintain an angle between the ring and the fixing plate. Thus, the mobile device accessory may make the ring have various angles and the ring maintain a specific angle to carry or position the mobile device conveniently.

### DISCLOSURE OF INVENTION

### TECHNICAL PROBLEM

Therefore, a patch-type controller according to the present invention has been made to solve the above problems.

An object of the present invention is to provide a patch-type controller, which is configured to allow a user to freely and easily handle a portable terminal with one hand although the portable terminal includes a display of a large size.

The problems to be solved by the present invention are not limited to those mentioned above, and unmentioned other problems may be clearly understood by those skilled in the art from the following descriptions.

### TECHNICAL SOLUTION

To accomplish the above object, according to one aspect of the present invention, there is provided a patch-type controller as defined in the appended claim 1. Preferred embodiments are defined in the appended dependent claims.

### ADVANTAGEOUS EFFECTS

According to the invention, a user can control a portable terminal through a separate input unit, while supporting the portable terminal with one hand, and thus there is an effect of increasing user's convenience of using the portable terminal.

Furthermore, as in some embodiments the input unit includes input buttons that are configured to generate various signals by combining a push button and a press button, there is an effect of providing a patch-type controller which can save manufacturing cost and overcome height constraint of the portable terminal.

The effects of the present invention are not limited to those mentioned above, and unmentioned other effects may be clearly understood by those skilled in the art from the following descriptions.

### BRIEF DESCRIPTION OF THE DRAWINGS

FIGS. 1 and 2 are views showing a patch-type controller according to a first embodiment of the present invention.
FIGS. 3 and 4 are views showing a patch-type controller according to a second embodiment of the present invention.
FIG. 5 is a view showing a state of a patch-type controller attached to a cellular phone according to a third embodiment of the present invention.
FIGS. 6 and 7 are views showing a patch-type controller according to a third embodiment of the present invention.
FIGS. 8 and 9 are views showing embodiments of a smart button that can be used as a direction input unit among the configurations of a patch-type controller according to the present invention.

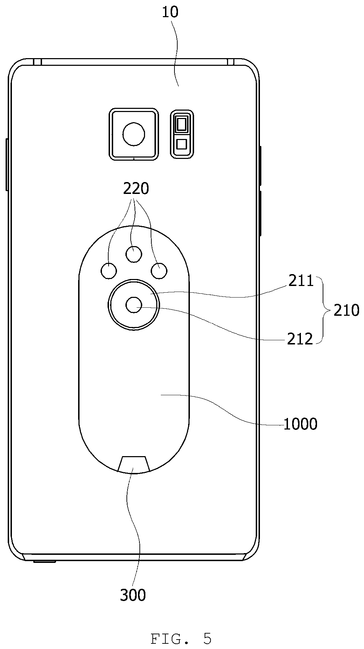

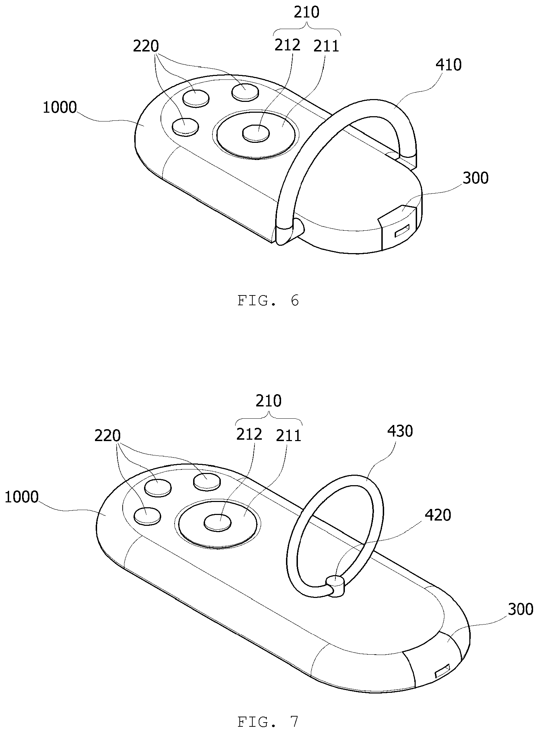

It is noted that the claimed invention relates to the patch-type controller described in relation to Figures 5 and 6 with reference to the third embodiment of the invention. Accordingly, any reference in the description to the first embodiment of the invention, the second embodiment of the invention or the patch-type controller of Figure 7 in the third embodiment of the invention should be understood as a reference to an example of a patch-type controller that is provided as useful for understanding the claimed invention but without being part of the claimed invention.

### BEST MODE FOR CARRYING OUT THE INVENTION

Hereafter, preferred embodiments according to the present invention will be described in detail with reference to the accompanying drawings, and the same reference numerals are assigned to the same or similar constitutional components regardless of symbols of the drawings, and repeated descriptions thereof will be omitted.

In addition, in describing the present invention, when it is determined that the detailed description of the known art related to the present invention may obscure the present invention, the detailed description thereof will be omitted. Further, it should be noted that the accompanying drawings are used just for easy understanding of the present invention and it should not be analyzed that the present invention is limited by the accompanying drawings.

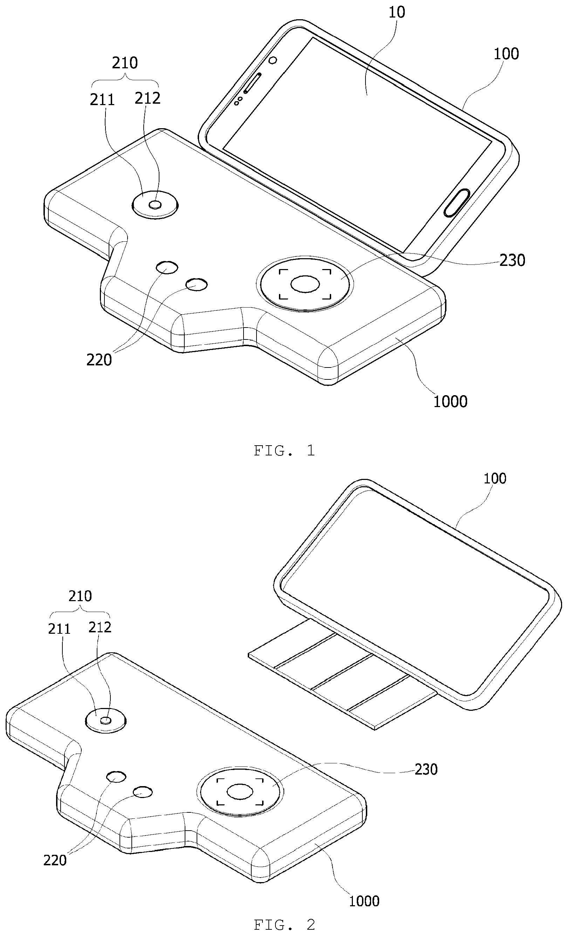

Hereinafter, a first embodiment of a patch-type controller according to the present invention will be described with reference to FIGS. 1 and 2. FIGS. 1 and 2 are views showing a patch-type controller according to a first embodiment of the present invention.

A patch-type controller according to a first embodiment of the present invention largely includes a main body 1000 and a control unit.

Specifically, the main body 1000 is provided with a connection unit 100 and an input unit, and the connection unit 100 is a configuration formed on the bottom surface or a side surface of the main body 1000 to allow connection to a cellular phone 10, a cellular phone case or a wireless communication device such as a tablet computer.

The control unit is a configuration for performing a function of controlling the cellular phone 10 or the wireless communication device.

Particularly, in the patch-type controller according to a first embodiment of the present invention, the connection unit 100 is formed to be extended from the side surface or the bottom surface of the main body 1000 in the lateral direction of the main body as shown in FIGS. 1 and 2, and the connection unit 100 is formed in a shape capable of mounting a cellular phone 10, a cellular phone case in which a cellular phone is already accommodated, or a wireless communication device.

In addition, the connection unit 100 of the patch-type controller according to a first embodiment of the present invention is preferably formed to be detachable from the main body 1000 as shown in FIG. 2.

Meanwhile, a direction input unit 210 and a function input unit 220 are disposed on the top surface of the main body 1000 of the patch-type controller according to a first embodiment of the present invention, and furthermore, additional input means such as a touch pad 230 or the like may be disposed, and details of the input units will be described below.

As the patch-type controller according to a first embodiment of the present invention described above is combined with a cellular phone, a cellular phone case or a wireless communication device, the patch-type controller may be used together with a game pad.

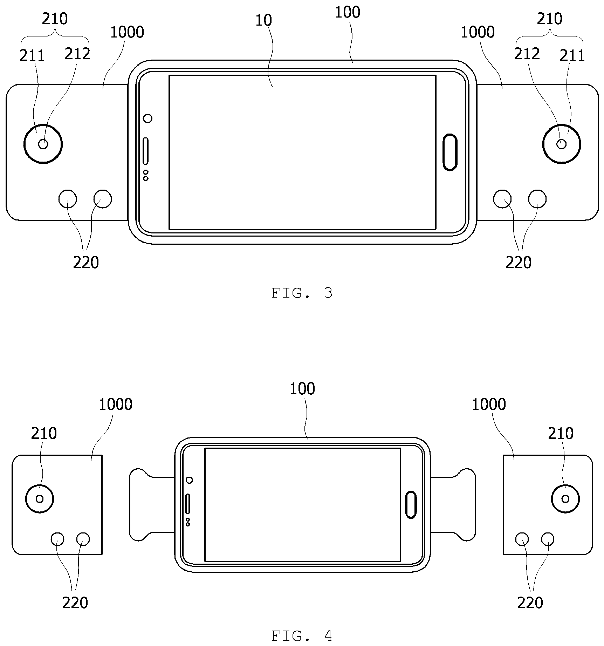

Hereinafter, a patch-type controller according to a second embodiment of the present invention will be described with reference to FIGS. 3 and 4. FIGS. 3 and 4 are views showing a patch-type controller according to a second embodiment of the present invention.

A patch-type controller according to a second embodiment of the present invention largely includes a main body 1000 and a control unit.

Specifically, the main body 1000 is provided with a connection unit 100 and an input unit, and the connection unit 100 is a configuration formed on the bottom surface or a side surface of the main body 1000 to allow connection to a cellular phone 10, a cellular phone case or a wireless communication device such as a tablet computer.

The control unit is a configuration for performing a function of controlling the cellular phone 10 or the wireless communication device.

Particularly, in the patch-type controller according to a second embodiment of the present invention, the connection unit 100 is formed to be extended from the side surface or the bottom surface of the main body 1000 in the lateral direction of the main body, like the patch-type controller according to a first embodiment of the present invention, and the connection unit 100 is formed in a shape capable of mounting the cellular phone 10, a cellular phone case in which a cellular phone is already accommodated, or a wireless communication device.

Particularly, in the case of the patch-type controller according to a second embodiment of the present invention, the main body 1000 is formed of two separate bodies provided with an input unit as shown in FIGS. 3 and 4, and the connection unit 100 and the two separate bodies are connected to dispose the connection unit 100 between the two separate bodies.

In the case of FIGS. 3 and 4, although the two separate bodies are respectively connected on the left and right sides of the cellular phone while the cellular phone is laid down in the horizontal direction, the two separate bodies may be connected on the top and bottom sides, and furthermore, two or more, not two, for example, four separate bodies may be disposed on the top, bottom, left and right sides of the connection unit 100.

In addition, the connection unit 100 according to a second embodiment of the present invention is preferably formed to be detachable from the separate bodies as shown in FIG. 4.

Meanwhile, a direction input unit 210 and a function input unit 220 may be disposed on the top surface of the separate bodies of the patch-type controller according to a second embodiment of the present invention, and details of the input units will be described below.

As the patch-type controller according to a second embodiment of the present invention described above is combined with a cellular phone, a cellular phone case or a wireless communication device, the patch-type controller may be configured so that a user may hold the two separate bodies with two hands.

Hereinafter, a patch-type controller according to a third embodiment of the present invention will be described with reference to FIGS. 5 to 7. FIG. 5 is a view showing a state of a patch-type controller attached to a cellular phone according to a third embodiment of the present invention, and FIGS. 6 and 7 are views showing a patch-type controller according to a third embodiment of the present invention.

A patch-type controller according to a third embodiment of the present invention largely includes a main body 1000 and a control unit.

Specifically, the main body 1000 is provided with a connection unit 100 and an input unit, and the connection unit 100 is an adhesive member, of which a side surface is disposed on the bottom surface of the main body 1000, and the other side surface is adhered on one side of the cellular phone 10, the cellular phone case or the wireless communication device.

According to the configuration as described above, the patch-type controller according to a third embodiment of the present invention is attached on the rear surface of the cellular phone 10 or the like as shown in FIG. 5.

The control unit is a configuration for performing a function of controlling the cellular phone 10 or the wireless communication device.

In addition, a direction input unit 210 and a function input unit 220 may be disposed on the main body 1000 of the patch-type controller according to a third embodiment of the present invention, and details of the input units will be described below.

Particularly, a supporting unit 410 or 430 is further included on the main body 1000 of the patch-type controller according to a third embodiment of the present invention so that a user may support the cellular phone 10 or the like by inserting a finger.

The supporting unit 410 may be formed in a "U" shape as shown in FIG. 6, one end and the other end of which are respectively connected to one side surface and the other side surface of the main body 1000, and the supporting unit 410 may be configured to be connected to the main body 1000 to be rotatable from the main body 1000 in the vertical direction.

In addition, as shown in FIG. 7, the patch-type controller may be configured to further include a connection member 420 on the top surface of the main body 1000, and a supporting unit 430 formed in an "O" shape is connected to the connection member 420 to be rotatable from the main body 1000 in the vertical direction.

In addition, the connection member 420 described above may be installed on the top surface of the main body 1000 to be rotatable in the horizontal direction with respect to the main body 1000, and in this case, the supporting unit 430 may rotate in all of the up, down, left and right directions from the main body 1000 as a result.

Meanwhile, a direction input unit 210 and a function input unit 220 may be disposed on the top surface of the main body 1000 of the patch-type controller according to a third embodiment of the present invention, and details of the input units will be described below.

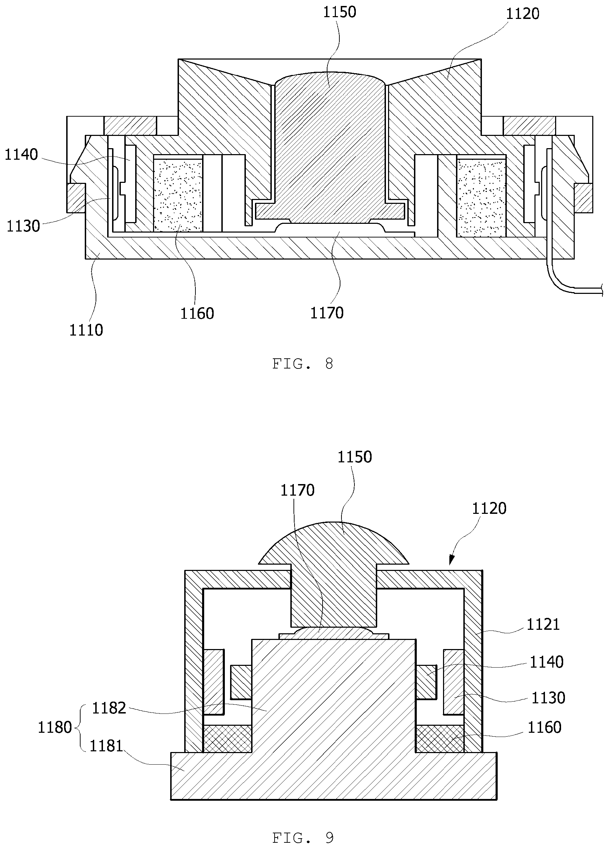

Hereinafter, the input units of the patch-type controllers according to a first embodiment to a third embodiment of the present invention described above will be described with reference to FIGS. 8 and 9. FIGS. 8 and 9 are views showing several embodiments of a smart button that can be used as a direction input unit among the configurations of a patch-type controller according to the present invention.

As described above, the patch-type controller according to the present invention is provided with an input unit on the top surface of the main body 1000, and the input unit may include a direction input unit 210 and a function input unit 220.

The direction input unit 210 is a configuration for performing at least a directional user interface (UI) function among a direction key function, a mouse function and a scroll function.

In addition, the direction input unit 210 may be configured to include a direction input element 211 for generating a direction signal on the basis of a lateral direction pressure, and a press button 212 disposed at the center portion of the direction input element 211 to generate an additional signal different from the direction signal by a downward pressure.

Furthermore, the additional signal generated by the press button 212 may be a click signal or an enter signal, or the additional signal may be a call communication on/off signal of a cellular phone or an on/off signal of a speaker phone function of the cellular phone.

Meanwhile, the patch-type controller according to the present invention may further include a set button which can set directionality of a direction signal generated by the direction input unit 210.

For example, in the case of the patch-type controllers according to a first embodiment and a second embodiment of the present invention, the direction input unit 210 is disposed in the direction of the display of the cellular phone 10, whereas in the case of the patch-type controller according to a third embodiment of the present invention, the direction input unit 210 is disposed in a direction opposite to the display of the cellular phone 10.

Accordingly, since setting of the left/right direction in the direction input unit 210 of the first embodiment and the second embodiment of the present invention should be opposite to setting in the direction input unit 210 of the third embodiment of the present invention, the patch-type controller according to the present invention preferably further includes a set button for setting the direction.

In addition, an application or a program for setting directionality of the direction signal generated by the direction input unit 210 may be installed in the cellular phone 10 or the wireless communication device to set the directionality of the direction signal by the application or the program.

Furthermore, instead of manually setting the directionality of the direction signal by a user, the directionality of the direction signal of the direction input unit 210 may be automatically set in association with an acceleration sensor, a gyro sensor and the like in the cellular phone 10 or the wireless communication device.

Meanwhile, in the case of the direction input unit 210 described above, the smart button shown in FIGS. 8 and 9 may be applied, and the structure and functions of the direction input unit 210 may be implemented through the smart button.

First, an example of the direction input unit 210 applied to the patch-type controller according to the present invention will be described with reference to FIG. 8.

The direction input unit 210 applied to the patch-type controller according to the present invention largely includes a housing 1110, a push button 1120, a sensor unit 1130 and a contact point 1140.

The housing 1110 is formed to include an inner space having an open top surface.

The push button 1120 is rested in the inner space provided in the housing 1100 and is configured to move back and forth and left and right as much as a predetermined distance in the lateral direction.

The sensor unit 1130 is a configuration provided on any one of the outer side surface of the push button 1120 or the inner side surface of the housing 1110, and the contact point 1140 is a configuration provided on the other one of the outer side surface of the push button 1120 or the inner side surface of the housing 1110.

Specifically, the sensor unit 1130 may be formed by a flexible printed circuit board provided with two or more terminal switches, and at this point, the terminal switches perform the function of the sensor unit 1130.

The contact point 1140 is preferably formed as a conductor, and in the end, when the push button 1120 is pushed in the lateral direction, the contact point 1140 contacts with the sensor unit 1130 located in the moving direction of the push button 1120, and an input signal allocated to the contacted sensor unit 1130 is generated.

A push-type input button for generating an input signal by applying pressure the button is pushed in the lateral direction as described above has already been proposed in variety of structures, and since the conventional push-type input button essentially requires a pressure sensor for sensing the pressure applied in the lateral direction, there is a disadvantage in that the manufacturing cost of a signal input device increases very high.

Particularly, since the pressure sensor should be installed in each direction of applying a pressure force when it is configured to generate different kinds of input signals according to a direction of pushing the button, there is a disadvantage in that the problem of manufacturing cost described above worsens.

However, according to an example of the direction input unit 210 applied to the patch-type controller according to the present invention, there is an advantage in that different kinds of input signals may be generated in each direction when a pressure force is applied in the lateral direction without a separate pressure sensor in each direction.

Meanwhile, if the contacting state of the sensor unit 1130 is maintained even when the pressure force applied to the push button 1120 is released after the contact point 1140 contacts with any one sensor unit 1130 as the push button 1120 is pushed and moved to any one side, the input signal may be continuously generated against the intention of the user.

To solve the problems described above, it is preferable to further include an elastic member 1160 which restores the position of the push button 1120 so that the sensor unit 1130 and the contact point 1140 may be spaced apart from each other when the push button 1120 is moved in the lateral direction.

If the elastic member 1160 is provided like this, the push button 1120 is restored to its initial position by an elastic force of the elastic member 1160 when the lateral direction external force applied to the push button 1120 is released, and it becomes a state of separating the sensor unit 1130 and the contact point 1140, i.e., a state of generating no input signal.

In addition, the example of the direction input unit 210 applied to the patch-type controller according to the present invention may further include a switch 1170 disposed on the bottom of the housing, and a press bottom 1150 disposed on the top surface of the push button 1120, as shown in FIG. 4 (→ 8) .

The press button 1150 passes through the push button 1120 upwards to be exposed to the outside, and the bottom of the press button 1150 rests on the switch 1170, and as the press button 1150 is pushed downwards and presses the switch 1170 when a downward pressure force is applied, a signal different from the signal generated by the movement of the push button 1120 is generated.

Accordingly, various signals may be generated on the basis of combination of the operations of the push button 1120 and the press button 1150.

Hereinafter, another example of the direction input unit 210 applied to the patch-type controller according to the present invention will be described with reference to FIG. 9.

The direction input unit 210 applied to the patch-type controller according to the present invention is configured to include a base member 1180, a push button 1120, a sensor unit 1130 and a contact point 1140.

The base member 1180 includes a bottom surface 1181, and a protrusion unit 1182 protruding upwards from the center portion of the bottom surface 1181.

The push button 1120 is disposed above the protrusion unit 1182, and a downward side wall 1121 is formed toward the bottom to surround the outer surface of the protrusion unit 1182.

In addition, as shown in FIG. 9, the sensor unit 1130 may be provided on the outer side surface of the protrusion unit 1182, and the contact point 1140 may be provided on the inner side surface of the protrusion unit 1182 in an area corresponding to an area of the outer side surface of the protrusion unit 1182 where the sensor unit 1130 is disposed.

Contrarily, the sensor unit 1130 may be provided on the inner side surface of a downward side wall 1121, and the contact point 1140 is provided on the outer side surface of the protrusion unit 1182 in an area corresponding to an area of the inner side surface of the downward side wall 1121 where the sensor unit 1130 is disposed.

In the structure as described above, if the push button 1120 moves in the lateral direction, the sensor unit 1130 and the contact point 1140 contact with each other, and a signal is generated. Specifically, the push button 1120 is configured to move back and forth and left and right as much as a predetermined distance in the lateral direction, not in the vertical direction, and when the user pushes the push button 1120 in the lateral direction, the contact point 1140 contacts with the sensor unit 1130 located in the moving direction of the push button 1120, and thus an input signal related to a corresponding sensor among a plurality of sensors formed in the sensor unit 1130 is generated.

Accordingly, the push button 1120 should be configured not to rotate, but only to move back and forth or left and right, it is since that if the push button 1120 is allowed to rotate, a corresponding sensor desired by a user may not contact with the contact point, and thus an unwanted input signal may be generated.

Meanwhile, a touch sensor or a tactile sensor may be used as the sensor unit 1130, and it is preferable to configure the sensor unit 1130 as a flexible printed circuit board, considering reduction of manufacturing cost and lightweight of a product.

That is, one or more sensors are disposed on the flexible printed circuit board, each of which is formed as a terminal switch including a positive electrode terminal and a negative electrode terminal, and the contact point 1140 is formed as a conductor, and since both the positive electrode terminal and the negative electrode terminal of the terminal switch contact with the contact point 1140 when the push button 1120 moves in the lateral direction, the positive electrode terminal and the negative electrode terminal are short-circuited, and thus an input signal is generated.

Specifically, the positive electrode terminal and the negative electrode terminal of the terminal switch like this may be disposed in parallel to be spaced apart from each other. Furthermore, the terminal switch may be configured of a positive electrode terminal and a negative electrode terminal arranged to have portions alternatingly arranged in the horizontal direction, i.e., terminals having a pattern of prominences and depressions in the vertical direction and disposed to offset and engage the prominences and the depressions, and the positive electrode terminal and the negative electrode terminal may be configured to maintain a state of minutely spacing the prominences and the depressions while the prominences and the depressions are disposed to offset and engage each other.

At the same time, the contact point 1140 may be formed to protrude only the contacting portion for the sake of robust short-circuit between the positive electrode terminal and the negative electrode terminal.

In addition, the direction input unit 210 may further include an elastic member 1160 for restoring the push button 1120 to the original position after the push button 1120 is moved to a lateral direction, and an elastic material such as a carbon sponge or silicon that is compressed when the push button 1120 moves to the lateral direction and applies a restoring elastic force to the push button 1120 is preferably applied as the elastic member 1160.

Meanwhile, the patch-type controller according to the present invention is provided with the direction input unit 210 and the function input unit 220 as described above, and the function input unit 220 will be described hereinafter.

The function input unit 220 performs a function of driving a specific function provided in the cellular phone 10 or the wireless communication device as described above, and the function input unit 220 includes at least a function button for executing at least a specific application or a specific program installed in the cellular phone 10 or the wireless communication device.

For example, if it is assumed that three function buttons are provided in the patch-type controller, the three function buttons may execute a camera application, a music application, and a web-browser application, respectively.

A user may set the applications or programs executed by the function buttons, and to this end, the patch-type controller according to the present invention may further include a set button for setting a specific application executed by a function button.

In addition, an application or a program for setting a specific application executed by the function button may be installed in the cellular phone 10 or the wireless communication device.

Meanwhile, the function input unit 220 may include at least a button corresponding to at least one among a home button, a back button and a specific mode button of the cellular phone 10 or the wireless communication device.

In addition, the function input unit 220 may include a button for implementing a function of converting a voice into characters or converting characters into a voice in the cellular phone 10 or the wireless communication device.

The main body 1000 of the patch-type controller according to an embodiment of the present invention includes a battery for supplying power to at least one among the input unit and the control unit.

Particularly, the battery is a rechargeable battery, and the main body 1000 may include a connector terminal for charging the battery.

It is preferable to enhance convenience of user by applying a connector terminal the same as those of the cellular phone 10 or the wireless communication device which accommodates or attaches the patch-type controller.

In addition, the control unit of the patch-type controller according to an embodiment of the present invention may be configured to simultaneously control the cellular phone 10 and a driving device driven through wireless communication with the cellular phone.

For example, when the driving device is a drone, the user controls the drone by handling the input unit of the patch-type controller.

At this point, a camera installed in the drone captures images, and captured image data may be transmitted to the cellular phone 10 or the wireless communication device so that a corresponding image may be outputted on a display provided in the cellular phone 10 or the wireless communication device.

Meanwhile, the patch-type controller according to an embodiment of the present invention may further include an extension bar formed to be extended from the side surface of the main body 1000 in a bar shape, and at least an auxiliary button disposed at an end of the extension bar to face the main body 1000.

The auxiliary button performs a function of the press button or the function button described above, and an end portion of the extension bar is preferably formed to be bent so that the auxiliary button may be attached on the side surface of the cellular phone 10, the cellular phone case, or the wireless communication device.

In addition, a hole or a groove is preferably formed in the cellular phone case of the cellular phone 10, on which the patch-type controller according to an embodiment of the present invention is attached, so that the main body 1000 of the patch-type controller can be accommodated therein.

For example, if the cellular phone 10 is installed in the cellular phone case while the patch-type controller is attached on the bottom surface of the cellular phone 10 as shown in FIG. 5, a problem occurs due to the height of the patch-type controller.

Accordingly, the problem described above can be solved by forming a groove or a hole in an area of the cellular phone case corresponding to the patch-type controller.

In addition, it is preferable to prevent separation of the main body from the cellular phone by forming a first connection unit on the inner periphery of the hole or the groove of the cellular phone case, forming a second connection unit at a portion of the main body 1000 corresponding to the first connection unit, and combining the first connection unit and the second connection unit with each other.

While the present invention has been described in detail with reference to the preferred embodiments, the scope of the present invention is not limited to specific embodiments and should be analyzed by the appended claims. Those skilled in the art should understand that many changes and modifications are possible without departing from the scope of the present invention.

## Claims

1. A patch-type controller comprising:
a main body (1000);
a connection unit (100), which is an adhesive member, of which a side surface is disposed on a bottom surface of the main body, and the other side surface is configured to be adhered on a side of a cellular phone, a cellular phone case or a wireless communication device;
an input unit (210, 220) formed on a top surface of the main body to be handled by a user; and
a control unit configured to generate an input signal of the cellular phone or the wireless communication device for controlling the cellular phone or the wireless communication device through the input unit,
**characterized in that**
the main body further includes a supporting unit (410) formed to allow the user to support the cellular phone, the cellular phone case or the wireless communication device by inserting a finger, wherein
the supporting unit (410) is formed in a "U" shape, an end and the other end of which are respectively connected to one side surface and the other side surface of the main body (1000), and the supporting unit is connected to the main body (1000) to be rotatable from the main body in a vertical direction.

2. The controller according to claim 1, wherein the input unit includes:
a direction input unit (210) for performing at least a directional user interface (UI) function among a direction key function, a mouse function and a scroll function; and
a function input unit (220) for driving a specific function provided in the cellular phone or the wireless communication device.

3. The controller according to claim 2, wherein the
direction input unit includes:
a direction input element (211) for generating a direction signal on the basis of a lateral direction pressure; and
a press button (212) disposed at a center portion of the direction input element (211) and configured to generate an additional signal different from the direction signal by a downward pressure.

4. The controller according to claim 3, wherein the additional signal is one of a click signal, an enter signal, a call communication on/off signal of the cellular phone and an on/off signal of a speaker phone function of the cellular phone.

5. The controller according to claim 2, further comprising a set button for setting directionality of a direction signal generated by the direction input unit.

6. The controller according to claim 2, wherein the function input unit (220) is at least a function button for executing at least a specific application installed in the cellular phone or the wireless communication device.

7. The controller according to claim 6, further comprising a set button for setting a specific application executed by the function button.

8. The controller according to claim 2, wherein the function input unit includes at least a button corresponding to at least one among a home button, a back button and a specific mode button of the cellular phone or the wireless communication device.

9. The controller according to claim 2, wherein the function input unit includes a button for implementing a function of converting a voice into characters or converting characters into a voice in the cellular phone or the wireless communication device.

10. The controller according to claim 1, wherein the main body further includes a battery for supplying power to at least one of the input unit and the control unit, wherein the main body includes a connector terminal for charging the battery.

## Patentansprüche

1. Patch-Steuerung, umfassend:
ein Hauptkörper (1000);
eine Verbindungseinheit (100), die ein Klebeelement ist, von dem eine Seitenoberfläche auf einer Bodenoberfläche des Hauptkörpers angeordnet ist und die andere Seitenoberfläche konfiguriert ist, um an eine Seite eines Mobiltelefons, einer Mobiltelefonhülle oder einer drahtlosen Kommunikationsvorrichtung geklebt zu werden;
eine Eingabeeinheit (210, 220), die auf einer oberen Oberfläche des Hauptkörpers ausgebildet ist, um von einem Benutzer gehandhabt zu werden; und
eine Steuereinheit, die konfiguriert ist, um ein Eingangssignal des Mobiltelefons oder der drahtlosen Kommunikationsvorrichtung zum Steuern des Mobiltelefons oder der drahtlosen Kommunikationsvorrichtung über die Eingabeeinheit zu erzeugen,
**dadurch gekennzeichnet, dass**
der Hauptkörper ferner eine Stützeinheit (410) einschließt, die ausgebildet ist, um dem Benutzer zu ermöglichen, das Mobiltelefon, die Mobiltelefonhülle oder die drahtlose Kommunikationsvorrichtung durch Einführen eines Fingers zu stützen, wobei die Stützeinheit (410) in einer "U"-Form ausgebildet ist, deren eines Ende und deren anderes Ende jeweils mit einer Seitenoberfläche und der anderen Seitenoberfläche des Hauptkörpers (1000) verbunden sind, und die Stützeinheit mit dem Hauptkörper (1000) verbunden ist, um vom Hauptkörper in vertikaler Richtung drehbar zu sein.

2. Steuerung nach Anspruch 1, wobei die Eingabeeinheit einschließt:
eine Richtungseingabeeinheit (210) zum Ausführen mindestens einer direktionalen Benutzerschnittstellen-(User Interface, UI)-Funktion unter einer Richtungstastenfunktion, eine Mausfunktion und eine Bildlauffunktion; und
eine Funktionseingabeeinheit (220) zum Ansteuern einer bestimmten Funktion, die in dem Mobiltelefon oder der drahtlosen Kommunikationsvorrichtung bereitgestellt wird.

3. Steuerung nach Anspruch 2, wobei die Richtungseingabeeinheit einschließt:
ein Richtungseingabeelement (211) zum Erzeugen eines Richtungssignals auf der Basis eines seitlichen Richtungsdrucks; und
eine Drucktaste (212), die an einem Mittelabschnitt des Richtungseingabeelements (211) angeordnet und konfiguriert ist, um ein zusätzliches Signal zu erzeugen, das sich vom Richtungssignal durch einen Abwärtsdruck unterscheidet.

4. Steuerung nach Anspruch 3, wobei das zusätzliche Signal ein Klicksignal, ein Eingabesignal, ein Anrufkommunikations-Ein/Aus-Signal des Mobiltelefons und ein Ein/Aus-Signal einer Freisprechfunktion des Mobiltelefons ist.

5. Steuerung nach Anspruch 2, ferner umfassend eine Einstelltaste zum Einstellen der Direktionalität eines Richtungssignals, das von der Richtungseingabeeinheit erzeugt wird.

6. Steuerung nach Anspruch 2, wobei die Funktionseingabeeinheit (220) mindestens eine Funktionstaste zum Ausführen mindestens einer bestimmten Anwendung ist, die in dem Mobiltelefon oder der drahtlosen Kommunikationsvorrichtung installiert ist.

7. Steuerung nach Anspruch 6, ferner umfassend eine Einstelltaste zum Einstellen einer bestimmten Anwendung, die von der Funktionstaste ausgeführt wird.

8. Steuerung nach Anspruch 2, wobei die Funktionseingabeeinheit mindestens eine Taste einschließt, die mindestens einer Taste unter einer Home-Taste, einer Zurück-Taste und einer spezifischen Modustaste des Mobiltelefons oder der drahtlosen Kommunikationsvorrichtung entspricht.

9. Steuerung nach Anspruch 2, wobei die Funktionseingabeeinheit eine Taste zum Implementieren einer Funktion zum Umwandeln einer Stimme in Zeichen oder zum Umwandeln von Zeichen in eine Stimme in dem Mobiltelefon oder der drahtlosen Kommunikationsvorrichtung einschließt.

10. Steuerung nach Anspruch 1, wobei der Hauptkörper ferner eine Batterie zum Zuführen von Energie zu mindestens einer der Eingabeeinheiten und der Steuereinheit einschließt, wobei der Hauptkörper einen Verbinderanschluss zum Laden der Batterie einschließt.

## Revendications

1. Contrôleur de type patch comprenant :
un corps principal (1000) ;
une unité de connexion (100), qui est un élément adhésif, dont une surface latérale est disposée sur une surface inférieure du corps principal, et l'autre surface latérale est configurée pour être adhérée sur un côté d'un téléphone cellulaire, une coque de téléphone cellulaire ou un dispositif de communication sans fil ;
une unité d'entrée (210, 220) formée sur une surface supérieure du corps principal destinée à être manipulée par un utilisateur ; et
une unité de contrôle configurée pour générer un signal d'entrée du téléphone cellulaire ou du dispositif de communication sans fil pour contrôler le téléphone cellulaire ou le dispositif de communication sans fil par le biais de l'unité d'entrée,
**caractérisé en ce que**
le corps principal inclut en outre une unité de support (410) formée pour permettre à l'utilisateur de porter le téléphone cellulaire, la coque du téléphone cellulaire ou le dispositif de communication sans fil en insérant un doigt, dans lequel l'unité de support (410) est formée en forme de « U », dont une extrémité et l'autre extrémité sont respectivement connectées à une surface latérale et à l'autre surface latérale du corps principal (1000), et l'unité de support est connecté au corps principal (1000) pour pouvoir tourner depuis le corps principal dans une direction verticale.

2. Contrôleur selon la revendication 1, dans lequel l'unité d'entrée inclut :
une unité d'entrée de direction (210) pour effectuer au moins une fonction d'interface utilisateur directionnelle (UI) parmi une fonction de touche de direction, une fonction de souris et une fonction de défilement ; et
une unité d'entrée de fonction (220) pour commander une fonction spécifique fournie dans le téléphone cellulaire ou le dispositif de communication sans fil.

3. Contrôleur selon la revendication 2, dans lequel l'unité d'entrée de direction inclut :
un élément d'entrée de direction (211) pour générer un signal de direction en fonction d'une pression de direction latérale ; et
un bouton-poussoir (212) disposé au niveau d'une partie centrale de l'élément d'entrée de direction (211) et configuré pour générer un signal supplémentaire différent du signal de direction par une pression vers le bas.

4. Contrôleur selon la revendication 3, dans lequel le signal supplémentaire est l'un d'un signal de clic, d'un signal d'entrée, d'un signal d'activation/désactivation de la communication d'appel du téléphone cellulaire et d'un signal d'activation/désactivation d'une fonction de haut-parleur du téléphone cellulaire.

5. Contrôleur selon la revendication 2, comprenant en outre un bouton de réglage pour régler la directionnalité d'un signal de direction généré par l'unité d'entrée de direction.

6. Contrôleur selon la revendication 2, dans lequel l'unité d'entrée de fonction (220) est au moins un bouton de fonction pour exécuter au moins une application spécifique installée dans le téléphone cellulaire ou le dispositif de communication sans fil.

7. Contrôleur selon la revendication 6, comprenant en outre un bouton de réglage pour régler une application spécifique exécutée par le bouton de fonction.

8. Contrôleur selon la revendication 2, dans lequel l'unité d'entrée de fonction inclut au moins un bouton correspondant à au moins l'un parmi un bouton d'accueil, un bouton de retour et un bouton de mode spécifique du téléphone cellulaire ou du dispositif de communication sans fil.

9. Contrôleur selon la revendication 2, dans lequel l'unité d'entrée de fonction inclut un bouton pour mettre en œuvre une fonction de conversion d'une voix en caractères ou de conversion de caractères en une voix dans le téléphone cellulaire ou le dispositif de communication sans fil.

10. Contrôleur selon la revendication 1, dans lequel le corps principal inclut en outre une batterie pour alimenter en énergie au moins l'une de l'unité d'entrée et de l'unité de contrôle, dans lequel le corps principal inclut une borne de connecteur pour charger la batterie.
